# EUROPEAN PATENT SPECIFICATION

(11) **EP 3 075 897 B1**
(45) Date of publication and mention of the grant of the patent: **07.03.2018**
(21) Application number: 14863564.2
(22) Date of filing: 22.01.2014
(51) Int. Cl.: D06F 39/02

(54) **WASHING MACHINE WITH AUTOMATICALLY-ADDED ADDITIVE, AND METHOD THEREFOR**
WASCHMASCHINE MIT AUTOMATISCHER ADDITIVZUGABE, SOWIE DAZUGEHÖRIGES VERFAHREN
LAVE-LINGE AYANT UN ADDITIF AJOUTÉ AUTOMATIQUEMENT, ET PROCÉDÉ ASSOCIÉ

(30) Priority: 25.11.2013 CN 201310606972
(43) Date of publication of application: 05.10.2016
(73) Proprietor: Haier Group Corporation, Qingdao, Shandong 266101 (CN); Qingdao Haier Drum Washing Machine Co., Ltd., Shandong 266101 (CN)
(72) Inventor: LV, Peishi, Qingdao Shandong 266101 (CN); ZHANG, Huacheng, Qingdao Shandong 266101 (CN); GAI, Song, Qingdao Shandong 266101 (CN); WANG, Yanli, Qingdao Shandong 266101 (CN)
(74) Representative: Ziebig, Marlene
(86) International application number: PCT/CN2014/071095
(87) International publication number: WO 2015/074340

(56) References cited:
- WO-A1-99/42647
- CN-A- 101 688 349
- CN-A- 101 956 311
- CN-A- 103 276 564
- CN-U- 202 157 205
- CN-U- 203 334 042
- CN-Y- 2 718 016
- DE-A1- 10 150 877
- US-A1- 2010 161 143

## Description

### FIELD OF THE INVENTION

The present invention relates to the field of washing machines and in particular, to a washing machine for automatically feeding an additive and a method.

### BACKGROUND OF THE INVENTION

With the continuous development of functional diversification and intelligentization of washing machines, higher requirements on operational convenience and feeding precision of detergent feeding are proposed. In terms of operational convenience, although an intelligent feeding washing machine that stores a large amount of laundry liquid at a time for multiple washing cycles has appeared in the market and reduces operational trouble of a user to some extent, the user still needs to purchase a laundry liquid in different packing manners, such as in bags or in bottles, from the market and feed proper amounts of detergent into a washing machine inherent component, a detergent accommodating trough, irregularly. In other words, a bottle or a bag of laundry liquid still needs to be fed at multiple times.

The feeding precision of a detergent is mainly represented by a feeding manner thereof, and detergent feeding manners disclosed in the market include a suction pump manner, a gear pump squeezing manner, and a constant volume metering manner. Because of a problem that an additive congeals to form a blockage, a pump-powered detergent feeding manner gradually disappears from the market of high-end products. The constant volume metering manner is a relatively popular detergent feeding control manner at present, but still has some disadvantages.

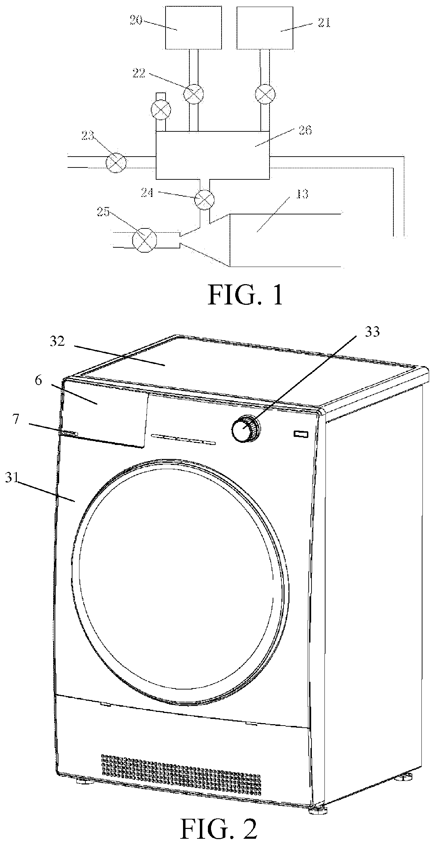

As shown in FIG. 1, first, running water flows into a negative pressure generator 13 through a first water inlet valve 25 to generate negative pressure to open a second electromagnetic valve 24, and a constant volume chamber 26 also generates negative pressure, so that the constant volume chamber 26 is filled with a liquid detergent in first detergent trough 20 under the effect of negative pressure until the constant volume chamber 26 is filled up, and the first electromagnetic valve 22 closes; then, a second water inlet valve 23 intakes water to dilute and flush out the detergent in the constant volume chamber 26. In view of this, this structure may only implement intelligent feeding with a constant volume space as a unit feeding amount, the feeding precision is merely about ±15% to ±20%, and precise feeding depending on the weight and dirty degree of clothes still cannot be achieved. In addition, this structure needs two water inlet valves, which increases manufacturing costs and reduces assembly efficiency.

In addition, an existing intelligent detergent feeding structure still has the following disadvantages: (1) after all, a detergent accommodating trough is not a dedicated detergent accommodating container and cannot ensure sealability, and long-term placement would lead to deterioration; (2) for a fixed machine, accommodating troughs thereof have a determinate structure and number and usually include a main washing trough, a pre-washing trough, and a softener trough, if a disinfectant needs to be used, the disinfectant needs to be placed into the softener trough, in this way, it is extremely easy to mix up different detergents and affect use effects of the detergents, and moreover, detergents of the same type and of different brands also need to use a same accommodating trough, which also causes mix-up of detergents; (3) an existing intelligent detergent feeding box usually does not have a dedicated detergent feeding box, that is, if a powder detergent needs to be used, it is necessary to directly pour the powder detergent onto clothes in a washing drum before washing, and the powder detergent not only injures the clothes but also cannot be dissolved easily; and (4) it is difficult to clean the detergent.

US 2010/161143 A1 discloses a modular fluid dispenser system for a washing machine. The washing machine has an aperture to where a module of the modular fluid dispenser system can be inserted to. The module has one or more containers from where additives can be supplied to the machine.

In view of the above, the present invention is proposed herein.

### SUMMARY OF THE INVENTION

An objective of the present invention is, to overcome disadvantages of the prior art, providing a washing machine for automatically feeding an additive, where long-term placement of an additive in an additive accommodating box would not easily cause deterioration and coagulation, a number of times that a user adds an additive is reduced, and additive feeding convenience is improved; a constant volume control process is omitted, additive feeding precision is improved, and waste of an additive is reduced; a problem that because an additive is extremely viscous, blades of a metering apparatus cannot be actuated to rotate to meter the additive is avoided, and a blockage of the metering apparatus caused by coagulation of an additive is also avoided at the same time; and an unfavorable washing effect caused by mix-up of different types of additives is also avoided.

Another objective of the present invention is providing a method of the foregoing washing machine for automatically feeding an additive.

To achieve the objective, the present invention uses the following technical solution: a washing machine for automatically feeding an additive, including an additive automatic feeding apparatus and an additive accommodating box for accommodating a liquid additive, where the additive accommodating box is an independent sealed ink cartridge-type structure, a washing machine housing is provided with at least one opening, the additive accommodating box is disposed inside the opening in a pull and push manner in a one-to-one correspondence and is in communication with/is not in communication with the additive automatic feeding apparatus. According to the invention the additive automatic feeding apparatus is an apparatus that generates negative pressure by using an inlet water flow to extract a liquid additive and performs quantitative feeding, the apparatus comprises a negative pressure generator located on an water inlet pipeline of the washing machine, a negative pressure region of the negative pressure generator is in communication with a metering apparatus, the negative pressure generator is further provided with a discharge liquid circulation passage, and the metering apparatus is also separately in communication with a first opening of an ink cartridge-type additive box and the discharge liquid circulation passage of the negative pressure generator.

The washing machine is provided with at least two openings, the additive accommodating box configured to accommodate a liquid additive is disposed inside at least one opening, a powder detergent accommodating box configured to accommodate a solid detergent is disposed inside at least one opening, and preferably, the washing machine is provided with a powder detergent accommodating box for accommodating a powder detergent and a corresponding opening or is provided with multiple additive accommodating boxes for separately accommodating a liquid detergent, a liquid softener, and a liquid disinfectant and corresponding openings.

The washing machine is provided with a base, the base is provided with at least one additive accommodating box opening, each opening is an independent chamber, or multiple openings are chambers having interiors in communication with each other, and a positioning slideway of the additive accommodating box is disposed inside the opening.

The base is further provided with at least one powder detergent accommodating box opening, an upper part of the opening is in communication with a water inlet of the washing machine, a lower part of the opening is provided with a water outlet in communication with a washing drum, and the powder detergent accommodating box opening is an independent sealed chamber and is isolated from the additive accommodating box opening.

A side, provided with an opening, of the base is provided with a decorative baffle, a side edge of the decorative baffle plate is hingedly connected to the washing machine and/or base, or the decorative cover plate is connected to the washing machine and/or base in a push and pull manner.

The washing machine is further provided with an additive stock warning apparatus, the additive accommodating box is provided with a liquid level detecting apparatus, the liquid level detecting apparatus controls, according to a detected liquid level signal, the warning apparatus to issue an alarm, and the additive stock warning apparatus is an additive stock display lamp and/or a buzzer.

The additive accommodating box is provided with a liquid outlet, the liquid outlet is provided with a pressure opening/closure valve, a press pop-out switch is disposed inside the opening, when the additive accommodating box is completely pulled into an interior of the opening, the pressure opening/closure valve is opened, and the liquid outlet is in communication with the additive automatic feeding apparatus, and when the additive accommodating box is further pressed forcefully, the additive accommodating box is popped out by specific displacement, the pressure opening/closure valve is closed, and the additive accommodating box can be pulled out from the opening.

The liquid outlet is located on an end surface, facing the opening, of the additive accommodating box and is located at a bottom of the end surface, the liquid outlet is provided with a one-way valve merely provided for an additive to flow out, the one-way valve is provided with a sealing member for controlling whether a liquid detergent can flow out, a control module capable of controlling the sealing member to move to enable the liquid detergent to flow out from the additive accommodating box is disposed at a position, corresponding to the sealing member, inside the opening, the control module includes an electromagnetic module and a piston rod connected to the electromagnetic module, another end of the piston rod is located on the sealing member, and the electromagnetic module drives the piston rod to move to actuate the sealing member to move to control the one-way valve to open and close.

The opening is located on a side wall of the washing machine, and the additive accommodating box is horizontally disposed, or the opening inclines downward from outside to inside, and the additive accommodating box is inclinedly disposed, or the opening is located on a top surface of the washing machine, and the additive accommodating box is vertically disposed.

The additive automatic feeding apparatus is an apparatus that generates negative pressure by using an inlet water flow to extract a liquid additive and performs quantitative feeding, the apparatus includes a negative pressure generator located on an water inlet pipeline of the washing machine, a negative pressure region of the negative pressure generator is in communication with a metering apparatus, the negative pressure generator is further provided with a discharge liquid circulation passage, and the metering apparatus is also separately in communication with a first opening of an ink cartridge-type additive box and the discharge liquid circulation passage of the negative pressure generator.

The metering apparatus includes a liquid passing chamber, at least two inlets and at least one outlet that are in communication with the liquid passing chamber and, a rotatable impeller disposed inside the liquid passing chamber, and a counting sensor disposed outside the liquid passing chamber to detect an impeller rotation angle, liquid throughput is calculated by means of measuring the impeller rotation angle, one of the inlets is in communication with a liquid outlet of the ink cartridge-type additive box, another inlet is in communication with the discharge liquid circulation passage, and the outlet is in communication with the washing drum.

A method of operating a washing machine for automatically feeding an additive is provided. In the method of the invention the washing machine operated comprises an additive automatic feeding apparatus and an additive accommodating box for accommodating a liquid additive, wherein the additive accommodating box is an independent sealed ink cartridge-type structure, a washing machine housing is provided with at least one opening, the additive accommodating box is disposed inside the opening in a pull and push manner in a one-to-one correspondence and is in communication with/is not in communication with the additive automatic feeding apparatus. According to the invention the additive automatic feeding apparatus comprises a negative pressure generator located on an water inlet pipeline of the washing machine, a negative pressure region of the negative pressure generator is in communication with a metering apparatus, the negative pressure generator is further provided with a discharge liquid circulation passage, and the metering apparatus is also separately in communication with a first opening of an ink cartridge-type additive box and the discharge liquid circulation passage of the negative pressure generator and the negative pressure generator sucks the additive from the additive accommodating box into the metering apparatus , meanwhile, a part of a water flow inside the negative pressure generator enters the metering apparatus separately through the discharge liquid circulation passage, the additive mixes with the water flow inside the metering apparatus to form a liquid additive mixture, which flows into the negative pressure generator and then enters the washing through the washing machine water inlet pipeline, so that the additive automatic feeding apparatus performs quantitative feeding.

Preferably, the washing machine operated is a washing machine according to the invention as described in the foregoing description.

In an embodiment of the method of the invention the washing machine is started, a main control board determines, according to a program, an additive that needs to be fed, if the additive is a liquid additive, the main control board controls an electromagnetic module corresponding to an additive accommodating box that accommodates the liquid additive to be powered on to drive a corresponding piston rod to squeeze the sealing member, a gap is generated around the sealing member, and the additive is extracted out by using negative pressure that is generated when the washing machine intakes water, and after the additive inside the additive accommodating box is used up, the additive accommodating box is pressed, the additive accommodating box is popped out, the additive accommodating box is pulled out from the opening, the one-way valve and sealing member are taken off to pour a corresponding additive into the interior thereof, and further the additive accommodating box is inserted into the corresponding opening, or a user may directly purchase an additive accommodating box of the type, mount the one-way valve and sealing member onto the additive accommodating box, and then insert the additive accommodating box into the corresponding opening.

After the technical solutions of the present invention are used, the following beneficial effects are brought:
1. The washing machine of the present invention uses a sealed additive accommodating box, where long-term placement of an additive in an interior thereof would not easily cause deterioration and coagulation, and uses an additive accommodating box that can be pulled out, so that the additive accommodating box can be taken out, and an additive can be added into the additive accommodating box at a time, thereby reducing a number of times that a user adds the additive, or the additive accommodating box can be replaced entirely, and the replacement is convenient, thereby improving additive feeding convenience.
2. An additive is sucked by means of negative pressure, a metering apparatus is disposed to greatly improve additive feeding precision, by means of the effect of negative pressure, a dosage of the additive is controlled by metering an additive diluent that flows through the metering apparatus, and a constant volume control process is omitted, thereby greatly improving additive dosage feeding precision, which may reach ±5%, and reducing waste of the additive.
3. Fresh water or a mixed liquid is sucked while an additive is sucked in the metering apparatus to dilute the additive, thereby avoiding a problem that because the additive is extremely viscous, blades of a metering apparatus cannot be actuated to rotate to meter the additive, and a blockage of the metering apparatus caused by coagulation of the additive.
4. Multiple liquid additive accommodating boxes separately accommodate different types of additives, thereby avoiding an unfavorable washing effect caused by mix-up of the different types of additives.
5. After the additive reaches a feeding amount, fresh water is continuously sucked in to flush the metering apparatus, to prevent the additive from congealing and blocking the metering apparatus, and meanwhile, in negative pressure generated in the continuation can suck the diluent in the metering apparatus completely, thereby avoiding a residue.

Specific implementation manners of the present invention are further described in detail below with reference to the accompanying drawings.

### BRIEF DESCRIPTION OF THE DRAWINGS

FIG. 1 is a schematic diagram of constant volume feeding in the prior art;
FIG. 2 is a structural diagram of a washing machine according to the present invention;
FIG. 3 is an exploded structural diagram after a decorative baffle plate is removed from a washing machine according to the present invention;
FIG. 4 is a schematic structural diagram of a base according to the present invention;
FIG. 5 is a sectional view of a feeding system according to the present invention; and
FIG. 6 is a schematic structural diagram of an additive accommodating box according to the present invention.
   1. Opening, 2. additive accommodating box, 3. liquid outlet, 4. powder detergent accommodating box, 5. base, 6. decorative baffle plate, 7. additive stock display lamp, 8. one-way valve, 9. sealing member, 10. piston rod, 11. electromagnetic module, 12. washing machine water inlet pipeline, 13. negative pressure generator, 14. metering apparatus, 15. water inlet, 16. water outlet, 17. discharge liquid circulation passage, 18. additive accommodating box opening, 19. powder detergent accommodating box opening, 20. first detergent trough, 21. second detergent trough, 22. first electromagnetic valve, 23. first water inlet valve, 24. second electromagnetic valve, 25. second water inlet valve, 26. constant volume chamber, 31. front panel, 32. top surface, 33. program selection knob.

### DETAILED DESCRIPTION OF THE INVENTION

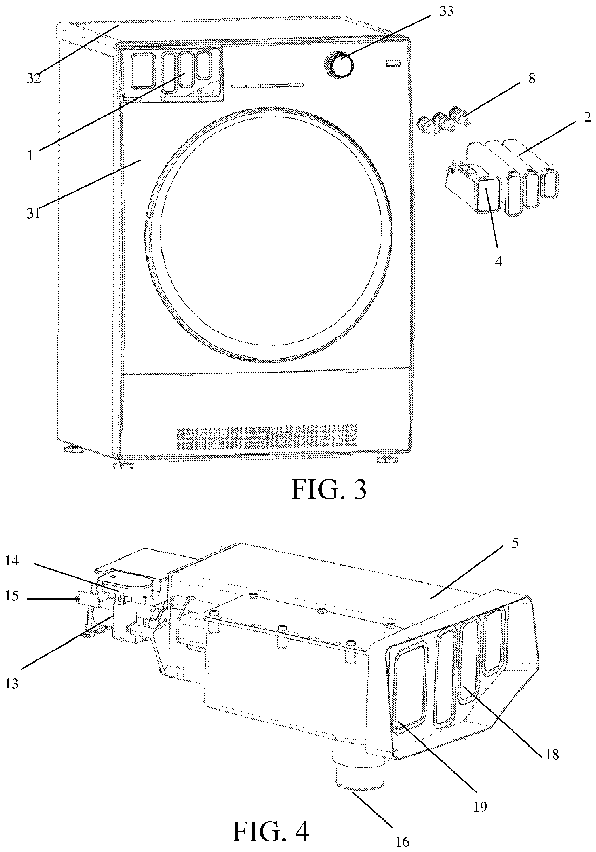

As shown in FIGs. 2 and 3, a washing machine for automatically feeding an additive according to the present invention includes an additive automatic feeding apparatus and an additive accommodating box 2 for accommodating a liquid additive, where the additive accommodating box is an independent sealed ink cartridge-type structure, a washing machine housing is provided with at least one opening 1, the additive accommodating box 2 is disposed inside the opening 1 in a pull and push manner in a one-to-one correspondence and is in communication with/is not in communication with the additive automatic feeding apparatus.

Preferably, the additive accommodating box 2 is a regular columnar chamber and is provided with a liquid outlet 3, the liquid outlet 3 is provided with a pressure opening/closure valve, a press pop-out switch is disposed inside the opening 1, when the additive accommodating box 2 is completely pulled into an interior of the opening, the pressure opening/closure valve is opened, and the liquid outlet is in communication with the additive automatic feeding apparatus, and when the additive accommodating box 2 is further pressed forcefully, the additive accommodating box 2 is popped out by specific displacement, the pressure opening/closure valve is closed, and the additive accommodating box 2 can be pulled out from the opening; the additive accommodating box 2 is inserted into the opening, the additive accommodating box 2 is pressed inward, the additive accommodating box 2 is locked, and when being further pressed, the additive accommodating box 2 is popped out; during use, a liquid additive is placed into the additive accommodating box 2 at a time, the additive accommodating box 2 is pressed into the interior of the opening 1, and when the washing machine needs to add the additive, the additive is sucked from the corresponding additive accommodating box 2 and after being dissolved, enters the washing drum; after the additive in the additive accommodating box 2 is used up, the additive accommodating box may be taken out, and an additive is added into the additive accommodating box at a time, thereby reducing a number of times that a user adds the additive, or the additive accommodating box can be replaced entirely, and the replacement is convenient; and because the additive accommodating box 2 is a sealed box body, long-term placement of an additive in an interior thereof would not easily cause deterioration and coagulation.

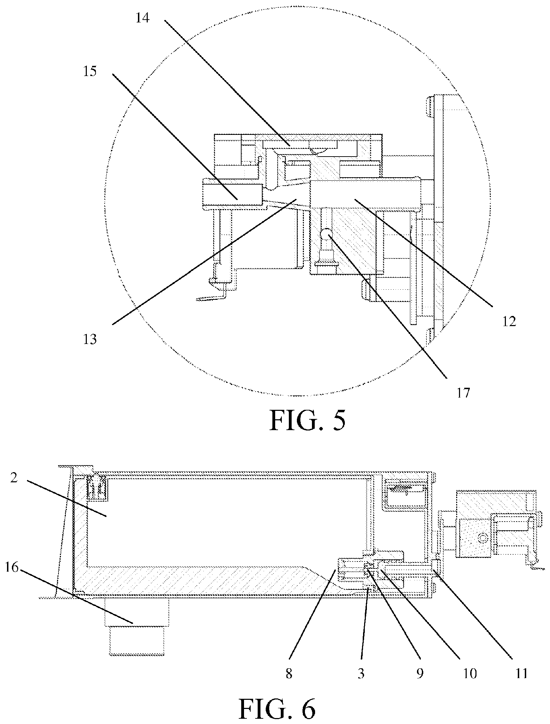

As shown in FIG. 6, the liquid outlet 3 is located on an end surface, facing the opening, of additive accommodating box 2 is located at a bottom of the end surface, so as to ensure that the additive in the additive accommodating box 2 can completely flow out and be used; the liquid outlet 3 is provided with a one-way valve 8, the one-way valve 8 controls the additive to flow out in a single direction, the one-way valve 8 is provided with a sealing member 9 for controlling whether a liquid detergent can flow out, and when the additive is not needed, the sealing member 9 seals the one-way valve, so as to ensure that the additive in the interior is isolated from the air outside.

A control module capable of controlling the sealing member 9 to move to enable the liquid detergent to flow out from the additive accommodating box 2 is disposed at a position, corresponding to the sealing member 9, inside the opening 1, the control module includes an electromagnetic module 11 and a piston rod 10 connected to the electromagnetic module 11, another end of the piston rod 10 is located on the sealing member 9, and the electromagnetic module 11 drives the piston rod to move to actuate the sealing member 9 to move to control the one-way valve 8 to open and close. The electromagnetic module 11 is powered on to drive the corresponding piston rod 10 to squeeze the sealing member 9, a gap is generated around the sealing member 9, and the additive in the interior can flow out through the gap. Alternatively, the electromagnetic valve may be disposed to control connection or disconnection of a pipeline between the additive accommodating box 2 and the metering apparatus 14.

The washing machine is provided with at least two openings 1, the additive accommodating box 2 is disposed inside at least one opening 1, a powder detergent accommodating box 4 configured to accommodate a solid detergent is disposed inside at least one opening 1. When a user uses the washing machine for washing, a powder detergent may be placed into the powder detergent accommodating box 4, a powder detergent washing mode is started, a washing machine water inlet pipeline 12 feeds water into a washing drum, and by means of flushing of running water, the powder detergent is fully dissolved and uniformly enters the washing drum, thereby preventing directly feeding the powder detergent onto clothes from injuring the clothes.

The washing machine may be provided with a powder detergent accommodating box 4 for accommodating a powder detergent and a corresponding powder detergent accommodating box opening 10 or may be provided with multiple powder detergent accommodating boxes 4 for accommodating a powder detergent and corresponding powder detergent accommodating box openings 19, so as to separately accommodate a powder detergent used when a main washing program, a pre-washing program, or another program runs. Meanwhile, the washing machine may be provided with multiple additive accommodating boxes 2 for separately accommodating a liquid detergent, a liquid softener, and a liquid disinfectant and corresponding additive accommodating box openings 18. The additive may be added at a time and used for many times, and it is unnecessary to add the additive each time washing is performed. In addition, different additives are separately accommodated in different additive accommodating boxes 2, thereby avoiding mix-up of additives because the multiple types of additives share one additive accommodating box and preventing an effect from being affected.

As shown in FIG. 4, the washing machine is provided with a base 5, the base is provided with an opening 1 configured to dispose an additive accommodating box opening 2, each opening 1 is an independent chamber, or multiple openings 1 are chambers having interiors in communication with each other, and a positioning slideway of the additive accommodating box 2 is disposed inside the opening 1. The openings 1 may be multiple parallel chambers that are independent from each other, the chambers is not in communication with each other, the interior of each of the chambers is provided with a liquid feeding opening corresponding to the liquid outlet of the additive accommodating box 2. Alternatively, outermost openings 1 among multiple openings 1 are openings 1 that is independent from each other, and their interiors are in communication with each other. Further alternatively, the base 5 is merely provided with a large opening 1, the interior of the opening 1 is provided with multiple positioning slideways, and the multiple additive accommodating boxes 2 are correspondingly pulled and pushed inside the positioning slideways.

The base 5 is further provided with at least one powder detergent accommodating box opening 19, an upper part of the opening is in communication with a washing machine water inlet 15, and a lower part of the opening is provided with a water outlet 16 in communication with the washing drum. The powder detergent accommodating box opening is an independent sealed chamber and is isolated from an accommodating box-type additive accommodating box opening 15, and a powder detergent in an interior thereof is directly flushed and dissolved by a water flow that enters through the water inlet 15, and then the water enters the washing drum through the water outlet 16. Isolation from an additive accommodating box opening 18 may prevent a powder detergent solution from entering a chamber inside the additive accommodating box opening 18.

To prevent the opening 1 and additive accommodating box 2 on the base 5 from exposing to the outside of the washing machine, a side, provided with the opening 1, of the base 5 is provided with a decorative baffle 6, and a side edge of the decorative baffle plate 6 is hingedly connected to the washing machine and/or base 5. When an operation needs to be performed on the additive accommodating box 2 or powder detergent accommodating box 4 inside the opening 1, the decorative baffle plate 6 may rotate upward, downward, or toward one side around a pivot, so as to expose the opening. Alternatively, the decorative cover plate 6 is connected to the washing machine and/or base 5 in a push and pull manner. When an operation needs to be performed on the additive accommodating box 2 or powder detergent accommodating box 4 inside the opening 1, the decorative baffle plate 6 is pushed toward on e side, so as to expose the opening 1.

The washing machine is further provided with an additive stock warning apparatus, the additive accommodating box is provided with a liquid level detecting apparatus, the liquid level detecting apparatus is in a signal connection with a main control board, the main control board is in a signal connection with the additive stock warning apparatus, the liquid level detecting apparatus controls, according to a detected liquid level signal, the warning apparatus to issue an alarm, and the additive stock warning apparatus is an additive stock display lamp 7 and/or a buzzer. The liquid level detecting apparatus may be a photoelectric sensor or a liquid level sensor, when detecting that the stock of the additive is less, the liquid level detecting apparatus sends a signal to the main control board, main control board sends a signal to the additive stock display lamp and/or buzzer to control the additive stock display lamp and/or buzzer to issue a sound and light alarm to prompt a user to add the additive in time or replace the additive accommodating box 2 in time.

The opening 1 is located on a front panel 31 of the washing machine and may be located on an upper-left or upper right part of the washing drum. The additive accommodating box 2 may be pulled out toward a front side (a side of a door body) of the washing machine, the additive accommodating box 2 is horizontally disposed, a liquid level of the additive inside the additive accommodating box 2 is also horizontal, and the additive accommodating box 2 is made of a transparent material, so that a user may directly and clearly observe a volume of the additive in the interior. Alternatively, the opening 1 inclines downward from outside to inside, and the interior of the additive accommodating box is inclinedly disposed downward. In this way, it can be ensured that when less additive remains, the additive gathers to the lowest corner, and the liquid outlet 3 is just located at this position. Therefore, the additive in the interior can be fully used, and residue is avoided.

Alternatively the opening 1 is located on a top surface 32 of the washing machine, the additive accommodating box 2 is vertically disposed and can be pulled out upward, and the liquid outlet 3 is located at the lowest part of the additive accommodating box 2.

The additive automatic feeding apparatus may be a feeding apparatus of any form. Preferably, the additive automatic feeding apparatus is an apparatus that generates negative pressure by using an inlet water flow to extract a liquid additive and performs quantitative feeding. As shown in FIG. 5, the washing machine further includes a negative pressure generator 13 located on an water inlet pipeline of the washing machine, a negative pressure region of the negative pressure generator 13 is in communication with a metering apparatus 14, the negative pressure generator 13 is further provided with a discharge liquid circulation passage 17, and the metering apparatus 14 is also separately in communication with a liquid outlet of the additive accommodating box 2 and the discharge liquid circulation passage 17 of the negative pressure generator 3. The negative pressure generator 13 sucks the additive from the additive accommodating box 2 into the metering apparatus 14, meanwhile, a part of a water flow inside the negative pressure generator 13 enters the metering apparatus 14 separately through the discharge liquid circulation passage 17, the additive mixes with the water flow inside the metering apparatus 14 to form a liquid additive mixture, which flows into the negative pressure generator 13 and then enters the washing through the washing machine water inlet pipeline 12.

The metering apparatus 14 includes a liquid passing chamber, at least two inlets and at least one outlet that are in communication with the liquid passing chamber and, a rotatable impeller disposed inside the liquid passing chamber, and a counting sensor disposed outside the liquid passing chamber to detect an impeller rotation angle, liquid throughput is calculated by means of measuring the impeller rotation angle, one of the inlets is in communication with an outlet of the additive accommodating box 2, another inlet is in communication with the discharge liquid circulation passage 17, and the outlet is in communication with the washing drum.

A method for automatically feeding an additive is provided, where the washing machine is started, a main control board determines, according to a program, an additive that needs to be fed; in a case of a powder detergent washing mode, a water flow of running water that enters from an water inlet 15 through a washing machine water inlet pipeline 2 flushes and dissolves a powder detergent in the interior and then enters a washing drum through a water outlet 16; in a case of an additive washing mode, an electromagnetic module 11 corresponding to an additive accommodating box 2 that accommodates the additive is controlled to be powered on to drive a corresponding piston rod 10 to squeeze a sealing member 9, a gap is generated around the sealing member 9, meanwhile, water is fed into the washing drum through the washing machine water inlet pipeline 2, and the additive inside the additive accommodating box 2 is sucked into a metering apparatus 14 by using negative pressure that is generated when the water flow passes through a negative pressure generator 13, and meanwhile, a part of the water flow inside the negative pressure generator 13 enters the metering apparatus 14 through a discharge liquid circulation passage 17, the additive mixes with the water flow inside the metering apparatus 14 to form a liquid additive mixture, which flows into the negative pressure generator 13 and then enters the washing drum through the washing machine water inlet pipeline 12. A problem that because an additive is extremely viscous, blades of the metering apparatus 14 cannot be actuated to rotate to meter the additive is avoided, and a blockage of the metering apparatus 14 caused by coagulation of an additive is also avoided at the same time. A constant volume control process is omitted, thereby greatly improving additive dosage feeding precision, which may reach ±5%, and reducing waste of the additive.

By means of a counting sensor disposed outside the liquid passing chamber to detect an impeller rotation angle, liquid throughput is calculated by means of measuring the impeller rotation angle. After the additive reaches a feeding amount, the electromagnetic module 11 is controlled to be powered off, the piston rod 10 returns, and the sealing member 9 seals the one-way valve 8. At this time, the additive cannot be sucked into the metering apparatus 14, the water flow inside the negative pressure generator 13 continuously flows into metering apparatus 14 through the discharge liquid circulation passage 17 to clean the metering apparatus 14, to prevent the additive from congealing and blocking the metering apparatus 14, and meanwhile, in negative pressure generated in the continuation can suck the diluent in the metering apparatus 14 completely, thereby avoiding a residue.

After the additive inside the additive accommodating box 2 is used up, the additive accommodating box 2 is pulled out from the opening, the one-way valve 8 and sealing member 9 are taken off to pour a corresponding additive into the interior thereof, and further the additive accommodating box 2 is inserted into the corresponding opening 1, or a user may directly purchase an additive accommodating box 2 of the type, mount the one-way valve 8 and sealing member 9 onto the additive accommodating box, and then insert the additive accommodating box 2 into the corresponding opening 1.

While there has been shown several and alternate embodiments of the present invention, it is to be understood that certain changes can be made as would be known to one skilled in the art without departing from the underlying scope of the present invention as is discussed and set forth above and below including claims. Furthermore, the embodiments described above and claims set forth below are only intended to illustrate the principles of the present invention and are not intended to limit the scope of the present invention to the disclosed elements.

## Claims

1. A washing machine for automatically feeding an additive, comprising an additive automatic feeding apparatus and an additive accommodating box (2) for accommodating a liquid additive, wherein the additive accommodating box is an independent sealed ink cartridge-type structure, a washing machine housing is provided with at least one opening (1), the additive accommodating box is disposed inside the opening in a pull and push manner in a one-to-one correspondence and is in communication with/is not in communication with the additive automatic feeding apparatus, **characterized in that**,
the additive automatic feeding apparatus is an apparatus that generates negative pressure by using an inlet water flow to extract a liquid additive and performs quantitative feeding, the apparatus comprises a negative pressure generator (13) located on an water inlet pipeline (12) of the washing machine, a negative pressure region of the negative pressure generator is in communication with a metering apparatus (14), the negative pressure generator is further provided with a discharge liquid circulation passage (17), and the metering apparatus is also separately in communication with a first opening of an ink cartridge-type additive box and the discharge liquid circulation passage of the negative pressure generator, such that the negative pressure generator sucks the additive from the additive accommodating box into the metering apparatus, meanwhile, a part of a water flow inside the negative pressure generator enters the metering apparatus separately through the discharge liquid circulation passage, the additive mixes with the water flow inside the metering apparatus to form a liquid additive mixture, which flows into the negative pressure generator and then enters the washing through the washing machine water inlet pipeline, so that the additive automatic feeding apparatus performs quantitative feeding.

2. The washing machine for automatically feeding an additive according to claim 1, wherein the washing machine is provided with at least two openings (1), the additive accommodating box configured to accommodate a liquid additive is disposed inside at least one opening, a powder detergent accommodating box (4) configured to accommodate a solid detergent is disposed inside at least one opening, and preferably, the washing machine is provided with a powder detergent accommodating box for accommodating a powder detergent and a corresponding opening or is provided with multiple additive accommodating boxes for separately accommodating a liquid detergent, a liquid softener, and a liquid disinfectant and corresponding openings.

3. The washing machine for automatically feeding an additive according to claim 1 or 2, wherein the washing machine is provided with a base (5), the base is provided with at least one additive accommodating box opening (18), each opening is an independent chamber, or multiple openings are chambers having interiors in communication with each other, and a positioning slideway of the additive accommodating box is disposed inside the opening.

4. The washing machine for automatically feeding an additive according to claim 3, wherein the base is further provided with at least one powder detergent accommodating box opening (19), an upper part of the opening is in communication with a water inlet (15) of the washing machine, a lower part of the opening is provided with a water outlet (16) in communication with a washing drum, and the powder detergent accommodating box opening is an independent sealed chamber and is isolated from the additive accommodating box opening.

5. The washing machine for automatically feeding an additive according to claim 3 or 4, wherein a side, provided with an opening, of the base is provided with a decorative baffle (6), a side edge of the decorative baffle plate is hingedly connected to the washing machine and/or base, or the decorative cover plate is connected to the washing machine and/or base in a push and pull manner.

6. The washing machine for automatically feeding an additive according to claim 1, wherein the washing machine is further provided with an additive stock warning apparatus, the additive accommodating box is provided with a liquid level detecting apparatus, the liquid level detecting apparatus controls, according to a detected liquid level signal, the warning apparatus to issue an alarm, and the additive stock warning apparatus is an additive stock display lamp and/or a buzzer.

7. The washing machine for automatically feeding an additive according to claim 1, wherein the additive accommodating box is provided with a liquid outlet (3), the liquid outlet is provided with a pressure opening/closure valve, a press pop-out switch is disposed inside the opening, when the additive accommodating box is completely pulled into an interior of the opening, the pressure opening/closure valve is opened, and the liquid outlet is in communication with the additive automatic feeding apparatus, and when the additive accommodating box is further pressed forcefully, the additive accommodating box is popped out by specific displacement, the pressure opening/closure valve is closed, and the additive accommodating box can be pulled out from the opening.

8. The washing machine for automatically feeding an additive according to claim 7, wherein the liquid outlet is located on an end surface, facing the opening, of the additive accommodating box and is located at a bottom of the end surface, the liquid outlet is provided with a one-way valve (8) merely provided for an additive to flow out, the one-way valve is provided with a sealing member (9) for controlling whether a liquid detergent can flow out, a control module capable of controlling the sealing member to move to enable the liquid detergent to flow out from the additive accommodating box is disposed at a position, corresponding to the sealing member, inside the opening, the control module comprises an electromagnetic module (11) and a piston rod (10) connected to the electromagnetic module, another end of the piston rod is located on the sealing member, and the electromagnetic module drives the piston rod to move to actuate the sealing member to move to control the one-way valve to open and close.

9. The washing machine for automatically feeding an additive according to claim 1, wherein the opening is located on a side wall of the washing machine, and the additive accommodating box is horizontally disposed, or the opening inclines downward from outside to inside, and the additive accommodating box is inclinedly disposed, or the opening is located on a top surface of the washing machine, and the additive accommodating box is vertically disposed.

10. The washing machine for automatically feeding an additive according to any one of the claims 1 to 9, wherein the metering apparatus comprises a liquid passing chamber, at least two inlets and at least one outlet that are in communication with the liquid passing chamber and, a rotatable impeller disposed inside the liquid passing chamber, and a counting sensor disposed outside the liquid passing chamber to detect an impeller rotation angle, liquid throughput is calculated by means of measuring the impeller rotation angle, one of the inlets is in communication with a liquid outlet of the ink cartridge-type additive box, another inlet is in communication with the discharge liquid circulation passage, and the outlet is in communication with the washing drum.

11. A method of operating a washing machine for automatically feeding an additive, wherein the washing machine comprises an additive automatic feeding apparatus and an additive accommodating box (2) for accommodating a liquid additive, wherein the additive accommodating box is an independent sealed ink cartridge-type structure, a washing machine housing is provided with at least one opening (1), the additive accommodating box is disposed inside the opening in a pull and push manner in a one-to-one correspondence and is in communication with/is not in communication with the additive automatic feeding apparatus, **characterized in that**,
the additive automatic feeding apparatus comprises a negative pressure generator (13) located on an water inlet pipeline (12) of the washing machine, a negative pressure region of the negative pressure generator is in communication with a metering apparatus (14), the negative pressure generator is further provided with a discharge liquid circulation passage (17), and the metering apparatus is also separately in communication with a first opening of an ink cartridge-type additive box and the discharge liquid circulation passage of the negative pressure generator and
the negative pressure generator sucks the additive from the additive accommodating box into the metering apparatus , meanwhile, a part of a water flow inside the negative pressure generator enters the metering apparatus separately through the discharge liquid circulation passage, the additive mixes with the water flow inside the metering apparatus to form a liquid additive mixture, which flows into the negative pressure generator and then enters the washing through the washing machine water inlet pipeline, so that the additive automatic feeding apparatus performs quantitative feeding.

12. Method of operating a washing machine according to claim 11, wherein the washing machine is a washing machine according to any one of claims 1 to 10.

## Patentansprüche

1. Waschmaschine zum automatischen Zuführen eines Additivs, umfassend eine Vorrichtung zum automatischen Zuführen eines Additivs und einen Additivaufnahmekasten (2) zum Aufnehmen eines flüssigen Additivs, wobei der Additivaufnahmekasten eine unabhängige verschlossene tintenpatronenartige Konstruktion ist, ein Waschmaschinengehäuse mit mindestens einer Öffnung (1) versehen ist, der Additivaufnahmekasten innerhalb der Öffnung in einer Eins-zu-Eins-Entsprechung zum Ziehen und Schieben angeordnet ist und mit der Vorrichtung zum automatischen Zuführen eines Additivs in Verbindung steht/nicht in Verbindung steht, **dadurch gekennzeichnet, dass** die Vorrichtung zum automatischen Zuführen eines Additivs eine Vorrichtung ist, die unter Verwendung eines Einlaufwasserstroms zum Entnehmen eines flüssigen Additivs einen Unterdruck erzeugt und eine quantitative Zuführung vornimmt, die Vorrichtung einen Unterdruckerzeuger (13) umfasst, der sich an einer Wassereinlaufleitung (12) der Waschmaschine befindet, ein Unterdruckbereich des Unterdruckerzeugers mit einer Dosiervorrichtung (14) in Verbindung steht, der Unterdruckerzeuger ferner mit einem Austragsflüssigkeitsumlaufkanal (17) versehen ist und die Dosiervorrichtung auch getrennt mit einer ersten Öffnung eines tintenpatronenartigen Additivkastens und dem Austragsflüssigkeitsumlaufkanal des Unterdruckerzeugers derart in Verbindung steht, dass der Unterdruckerzeuger das Additiv aus dem Additivaufnahmekasten in die Dosiervorrichtung saugt, während ein Teil eines Wasserstroms in dem Unterdruckerzeuger separat in die Dosiervorrichtung durch den Austragsflüssigkeitsumlaufkanal gelangt, sich das Additiv mit dem Wasserstrom in der Dosiervorrichtung vermischt und so eine flüssige Additivmischung entsteht, die in den Unterdruckerzeuger fließt und anschließend durch die Wassereinlaufleitung der Waschmaschine in den Waschvorgang gelangt, sodass die Vorrichtung zum automatischen Zuführen eines Additivs eine quantitative Zuführung vornimmt.

2. Waschmaschine zum automatischen Zuführen eines Additivs nach Anspruch 1, wobei die Waschmaschine mit mindestens zwei Öffnungen (1) versehen ist, wobei der Additivaufnahmekasten, der so eingerichtet ist, dass er ein flüssiges Additiv aufnimmt, in mindestens einer Öffnung angeordnet ist, ein Pulverwaschmittelaufnahmekasten (4), der so eingerichtet ist, dass er ein festes Waschmittel aufnimmt, in mindestens einer Öffnung angeordnet ist, und die Waschmaschine vorzugsweise mit einem Pulverwaschmittelaufnahmekasten zum Aufnehmen eines Pulverwaschmittels und einer entsprechenden Öffnung versehen ist oder mit mehreren Additivaufnahmekästen zum getrennten Aufnehmen eines Flüssigwaschmittels, eines Flüssigweichspülers und eines flüssigen Desinfektionsmittels und entsprechenden Öffnungen versehen ist.

3. Waschmaschine zum automatischen Zuführen eines Additivs nach Anspruch 1 oder 2, wobei die Waschmaschine mit einem Grundteil (5) versehen ist, das Grundteil mit mindestens einer Additivaufhahmekastenöffhung (18) versehen ist, jede Öffnung eine unabhängige Kammer ist oder mehrere Öffnungen Kammern mit Innenräumen aufweisen, die miteinander in Verbindung stehen, und eine Positionierungsgleitführung für den Additivaufnahmekasten in der Öffnung angeordnet ist.

4. Waschmaschine zum automatischen Zuführen eines Additivs nach Anspruch 3, wobei das Grundteil ferner mit mindestens einer Pulverwaschmittelaufnahmekastenöffnung (19) versehen ist, ein oberer Teil der Öffnung mit einem Wassereinlauf (15) der Waschmaschine in Verbindung steht, ein unterer Teil der Öffnung mit einem Wasserauslauf (16) versehen ist, der mit einer Waschtrommel in Verbindung steht, und die Pulverwaschmittelaufnahmekastenöffnung eine unabhängige verschlossene Kammer ist und von der Additivaufhahmekastenöffnung getrennt ist.

5. Waschmaschine zum automatischen Zuführen eines Additivs nach Anspruch 3 oder 4, wobei eine Seite des Grundteils, die mit einer Öffnung versehen ist, mit einer Zierklappe (6) versehen ist, ein Seitenrand der Zierklappplatte gelenkig mit der Waschmaschine und/oder dem Grundteil verbunden ist oder die Zierabdeckplatte mit der Waschmaschine und/oder dem Grundteil zum Ziehen und Schieben verbunden ist.

6. Waschmaschine zum automatischen Zuführen eines Additivs nach Anspruch 1, wobei die Waschmaschine ferner mit einer Vorrichtung zum Warnen bei geringem Additiworrat versehen ist, der Additivaufnahmekasten mit einer Flüssigkeitsstanderfassungsvorrichtung versehen ist, die Flüssigkeitsstanderfassungsvorrichtung entsprechend einem erfassten Flüssigkeitsstandsignal die Warnvorrichtung so steuert, dass sie eine Warnung ausgibt, und die Vorrichtung zum Warnen bei geringem Additivvorrat eine Additivvorrat-Anzeigelampe und/oder ein Summer ist.

7. Waschmaschine zum automatischen Zuführen eines Additivs nach Anspruch 1, wobei der Additivaufnahmekasten mit einem Flüssigkeitsauslauf (3) versehen ist, der Flüssigkeitsauslauf mit einem Drucköffnungs-/Druckverschlussventil versehen ist, ein Ausdrück-Druckschalter in der Öffnung angeordnet ist, wenn der Additivaufnahmekasten vollständig in einen Innenraum der Öffnung gezogen wird, das Drucköffnungs-/Druckverschlussventil geöffnet wird und der Flüssigkeitsauslauf mit der Vorrichtung zum automatischen Zuführen eines Additivs in Verbindung steht, und wenn weiter stark auf den Additivaufnahmekasten gedrückt wird, der Additivaufnahmekasten über eine bestimmte Entfernung herausgedrückt wird, das Drucköffhungs-/Druckverschlussventil geschlossen wird und der Additivaufnahmekasten aus der Öffnung herausgezogen werden kann.

8. Waschmaschine zum automatischen Zuführen eines Additivs nach Anspruch 7, wobei sich der Flüssigkeitsauslauf an einer der Öffnung zugewandten Stirnfläche des Additivaufnahmekastens befindet und sich an einem Boden der Stirnfläche befindet, der Flüssigkeitsauslauf mit einem Rückschlagventil (8) versehen ist, das ausschließlich dafür vorgesehen ist, dass ein Additiv herausläuft, das Rückschlagventil mit einem Dichtungselement (9) versehen ist, um zu steuern, ob ein Flüssigwaschmittel herauslaufen kann, ein Steuermodul, das in der Lage ist, das Dichtungselement so zu steuern, dass es sich bewegt und so zulässt, dass das Flüssigwaschmittel aus dem Additivaufnahmekasten herausläuft, an einer dem Dichtungselement entsprechenden Stelle in der Öffnung angeordnet ist, das Steuermodul ein elektromagnetisches Modul (11) und eine mit dem elektromagnetischen Modul verbundene Kolbenstange (10) umfasst, sich ein weiteres Ende der Kolbenstange an dem Dichtungselement befindet und das elektromagnetische Modul die Kolbenstange so antreibt, dass sie sich bewegt und das Dichtungselement betätigt, damit es sich bewegt und das Rückschlagventil so gesteuert wird, dass es öffnet und schließt.

9. Waschmaschine zum automatischen Zuführen eines Additivs nach Anspruch 1, wobei sich die Öffnung an einer Seitenwand der Waschmaschine befindet und der Additivaufnahmekasten waagerecht angeordnet ist oder die Öffnung von außen nach innen nach unten geneigt ist und der Additivaufnahmekasten geneigt angeordnet ist oder sich die Öffnung an einer Oberseite der Waschmaschine befindet und der Additivaufnahmekasten senkrecht angeordnet ist.

10. Waschmaschine zum automatischen Zuführen eines Additivs nach einem der Ansprüche 1 bis 9, wobei die Dosiervorrichtung eine Flüssigkeitsdurchlaufkammer, mindestens zwei Einläufe und mindestens einen Auslauf, die mit der Flüssigkeitsdurchlaufkammer in Verbindung stehen, sowie ein drehbares Flügelrad umfasst, das in der Flüssigkeitsdurchlaufkammer angeordnet ist, sowie einen außerhalb der Flüssigkeitsdurchlaufkammer angeordneten Zählsensor zum Erfassen eines Flügelrad-Drehwinkels, ein Flüssigkeitsdurchsatz über die Messung des Flügelrad-Drehwinkels berechnet wird, einer der Einläufe mit einem Flüssigkeitsauslauf des tintenpatronenartigen Additivkastens in Verbindung steht, ein weiterer Einlauf mit dem Austragsflüssigkeitsumlaufkanal in Verbindung steht und der Auslauf mit der Waschtrommel in Verbindung steht.

11. Verfahren zum Betreiben einer Waschmaschine zum automatischen Zuführen eines Additivs, wobei die Waschmaschine eine Vorrichtung zum automatischen Zuführen eines Additivs und einen Additivaufnahmekasten (2) zum Aufnehmen eines flüssigen Additivs umfasst, wobei der Additivaufnahmekasten eine unabhängige verschlossene tintenpatronenartige Konstruktion ist, ein Waschmaschinengehäuse mit mindestens einer Öffnung (1) versehen ist, der Additivaufnahmekasten innerhalb der Öffnung in einer Eins-zu-Eins-Entsprechung zum Ziehen und Schieben angeordnet ist und mit der Vorrichtung zum automatischen Zuführen eines Additivs in Verbindung steht/nicht in Verbindung steht, **dadurch gekennzeichnet, dass**
die Vorrichtung zum automatischen Zuführen eines Additivs einen Unterdruckerzeuger (13) umfasst, der sich an einer Wassereinlaufleitung (12) der Waschmaschine befindet, ein Unterdruckbereich des Unterdruckerzeugers mit einer Dosiervorrichtung (14) in Verbindung steht, der Unterdruckerzeuger ferner mit einem Austragsflüssigkeitsumlaufkanal (17) versehen ist und die Dosiervorrichtung auch getrennt mit einer ersten Öffnung eines tintenpatronenartigen Additivkastens und dem Austragsflüssigkeitsumlaufkanal des Unterdruckerzeugers in Verbindung steht und
der Unterdruckerzeuger das Additiv aus dem Additivaufnahmekasten in die Dosiervorrichtung saugt, während ein Teil eines Wasserstroms in dem Unterdruckerzeuger separat in die Dosiervorrichtung durch den Austragsflüssigkeitsumlaufkanal gelangt, sich das Additiv mit dem Wasserstrom in der Dosiervorrichtung vermischt und so eine flüssige Additivmischung bildet, die in den Unterdruckerzeuger fließt und anschließend durch die Wassereinlaufleitung der Waschmaschine in den Waschvorgang gelangt, sodass die Vorrichtung zum automatischen Zuführen eines Additivs eine quantitative Zuführung vornimmt.

12. Verfahren zum Betreiben einer Waschmaschine nach Anspruch 11, wobei die Waschmaschine eine Waschmaschine nach einem der Ansprüche 1 bis 10 ist.

## Revendications

1. Machine à laver à alimentation automatique d'un additif, comprenant un dispositif d'alimentation automatique en additif et un boîtier de réception d'additif (2) destiné à contenir un additif liquide, où le boîtier de réception d'additif est de type cartouche d'encre scellée indépendamment, la carrosserie de machine à laver est pourvue d'au moins une ouverture (1), le boîtier de réception d'additif est disposé à l'intérieur de l'ouverture de manière à pouvoir être poussé et tiré en correspondance directe et est en communication avec/n'est pas en communication avec le dispositif d'alimentation automatique en additif, **caractérisée en ce que**
le dispositif d'alimentation automatique en additif est un dispositif qui génère une pression négative au moyen d'un débit d'admission d'eau pour extraire un additif liquide et exécute une alimentation quantitative, le dispositif comprend un générateur de pression négative (13) monté sur un conduit d'admission d'eau (12) de la machine à laver, une zone de pression négative du générateur de pression négative est en communication avec un dispositif de dosage (14), le générateur de pression négative est en outre pourvu d'un passage de circulation de liquide évacué (17), et le dispositif de dosage est également en communication séparée avec une première ouverture d'un boîtier d'additif de type cartouche d'encre et le passage de circulation de liquide évacué du générateur de pression négative, de sorte que le générateur de pression négative pompe l'additif du boîtier de réception d'additif vers le dispositif de dosage, une partie du débit d'eau à l'intérieur du générateur de pression négative pénétrant simultanément dans le dispositif de dosage de manière séparée par le passage de circulation de liquide évacué, l'additif se mélange au débit d'eau à l'intérieur du dispositif de dosage pour former un mélange d'additif liquide qui s'écoule vers le générateur de pression négative avant d'accéder à la lessive par le conduit d'admission d'eau de la machine à laver, si bien que le dispositif d'alimentation automatique en additif exécute une alimentation quantitative.

2. Machine à laver à alimentation automatique d'un additif selon la revendication 1, où ladite machine à laver est pourvue d'au moins deux ouvertures (1), le boîtier de réception d'additif destiné à contenir un additif liquide est disposé à l'intérieur d'au moins une ouverture, un boîtier de réception de détergent en poudre (4) prévu pour contenir un détergent solide est disposé à l'intérieur d'au moins une ouverture, et la machine à laver est préférentiellement pourvue d'un boîtier de réception de détergent en poudre destiné à contenir un détergent en poudre et une ouverture correspondante est prévue avec plusieurs boîtiers de réception d'additif pour la réception séparée d'un détergent liquide, d'un adoucissant liquide et d'un désinfectant liquide, et des ouvertures correspondantes.

3. Machine à laver à alimentation automatique d'un additif selon la revendication 1 ou la revendication 2, où ladite machine à laver présente une base (5), ladite base étant pourvue d'au moins une ouverture (18) de boîtier de réception d'additif, chaque ouverture est un compartiment indépendant, ou plusieurs ouvertures sont des compartiments en communication entre elles, et un glissière de mise en place du boîtier de réception d'additif est disposée à l'intérieur de l'ouverture.

4. Machine à laver à alimentation automatique d'un additif selon la revendication 3, où la base est en outre pourvue d'au moins une ouverture (19) de boîtier de réception de détergent en poudre, une partie supérieure de l'ouverture est en communication avec une admission d'eau (15) de la machine à laver, une partie inférieure de l'ouverture est pourvue d'une sortie d'eau (16) en communication avec un tambour de lavage, et l'ouverture du boîtier de réception de détergent en poudre est un compartiment scellé indépendamment et est isolée de l'ouverture du boîtier de réception d'additif.

5. Machine à laver à alimentation automatique d'un additif selon la revendication 3 ou la revendication 4, où un côté de la base présentant une ouverture est pourvu d'un panneau décoratif (6), un bord latéral dudit panneau décoratif étant articulé par charnière à la machine à laver et/ou à la base, ou la plaque de couverture décorative est raccordée à la machine à laver et/ou à la base de manière à pouvoir être poussée et tirée.

6. Machine à laver à alimentation automatique d'un additif selon la revendication 1, où ladite machine à laver est en outre pourvu d'un dispositif d'alerte de réserve d'additif, le boîtier de réception d'additif est pourvu d'un dispositif détecteur de niveau de liquide, ledit dispositif détecteur de niveau de liquide commande, en fonction d'un signal de niveau de liquide détecté, l'émission d'une alerte par le dispositif d'alerte, et le dispositif d'alerte de réserve d'additif est un voyant indicateur de réserve d'additif et/ou un avertisseur acoustique.

7. Machine à laver à alimentation automatique d'un additif selon la revendication 1, où le boîtier de réception d'additif est pourvu d'une sortie de liquide (3), ladite sortie de liquide est pourvue d'une vanne d'ouverture/de fermeture de pression, un commutateur à bouton déclenchable est disposé à l'intérieur de l'ouverture, quand le boîtier de réception d'additif est entièrement tiré à l'intérieur de l'ouverture, la vanne d'ouverture/de fermeture de pression est ouverte, et la sortie de liquide est en communication avec le dispositif d'alimentation automatique en additif, et quand le boîtier de réception d'additif est enfoncé par force, le boîtier de réception d'additif est déclenché par déplacement spécifique, la vanne d'ouverture/de fermeture de pression est fermée et le boîtier de réception d'additif peut être retiré de l'ouverture.

8. Machine à laver à alimentation automatique d'un additif selon la revendication 7, où la sortie de liquide est située sur une surface d'extrémité opposée à l'ouverture du boîtier de réception d'additif et sur un fond de la surface d'extrémité, la sortie de liquide est pourvue d'une vanne antiretour (8) servant exclusivement au refoulement d'un additif, ladite vanne antiretour est pourvue d'un élément de fermeture (9) destiné à commander si un détergent liquide peut être refoulé, un module de commande capable de commander le déplacement de l'élément de fermeture pour permettre au détergent liquide de s'écouler hors du boîtier de réception d'additif est disposé à un emplacement correspondant à l'élément de fermeture à l'intérieur de l'ouverture, le module de commande comprend un module électromagnétique (11) et une tige de piston (10) raccordée au module électromagnétique, une autre extrémité de la tige de piston est disposée sur l'élément de fermeture, et le module électromagnétique entraîne le mouvement de la tige de piston pour actionner un déplacement de l'élément de fermeture afin de commander l'ouverture et la fermeture de la vanne antiretour.

9. Machine à laver à alimentation automatique d'un additif selon la revendication 1, où l'ouverture est située sur une paroi latérale de la machine à laver, et le boîtier de réception d'additif est monté horizontalement, ou l'ouverture est inclinée vers le bas de l'extérieur vers l'intérieur, et le boîtier de réception d'additif est monté en inclinaison, ou l'ouverture est située sur une surface supérieure de la machine à laver et le boîtier de réception d'additif est monté verticalement.

10. Machine à laver à alimentation automatique d'un additif selon l'une des revendications 1 à 9, où le dispositif de dosage comprend un compartiment de passage de liquide, au moins deux entrées et au moins une sortie en communication avec le compartiment de passage de liquide et un rotor disposé à l'intérieur du compartiment de passage de liquide, et un capteur de comptage disposé à l'extérieur du compartiment de passage de liquide pour détecter un angle de rotation du rotor, le débit de liquide est calculé par mesure de l'angle de rotation du rotor, une des entrées est en communication avec une sortie de liquide du boîtier d'additif de type cartouche d'encre, une autre entrée est en communication avec le passage de circulation de liquide évacué, et la sortie est en communication avec le tambour de lavage.

11. Procédé de fonctionnement d'une machine à laver à alimentation automatique d'un additif, où ladite machine à laver comprend un dispositif d'alimentation automatique en additif et un boîtier de réception d'additif (2) destiné à contenir un additif liquide, où le boîtier de réception d'additif est de type cartouche d'encre scellée indépendamment, la carrosserie de machine à laver est pourvue d'au moins une ouverture (1), le boîtier de réception d'additif est disposé à l'intérieur de l'ouverture de manière à pouvoir être poussé et tiré en correspondance directe et est en communication avec/n'est pas en communication avec le dispositif d'alimentation automatique en additif, **caractérisé en ce que**
le dispositif d'alimentation automatique en additif comprend un générateur de pression négative (13) monté sur un conduit d'admission d'eau (12) de machine à laver, une zone de pression négative du générateur de pression négative est en communication avec un dispositif de dosage (14), le générateur de pression négative est en outre pourvu d'un passage de circulation de liquide évacué (17), et le dispositif de dosage est également en communication séparée avec une première ouverture d'un boîtier d'additif de type cartouche d'encre et le passage de circulation de liquide évacué du générateur de pression négative, et
le générateur de pression négative pompe l'additif du boîtier de réception d'additif vers le dispositif de dosage, une partie du débit d'eau à l'intérieur du générateur de pression négative pénétrant simultanément dans le dispositif de dosage de manière séparée par le passage de circulation de liquide évacué, l'additif se mélange au débit d'eau à l'intérieur du dispositif de dosage pour former un mélange d'additif liquide qui s'écoule vers le générateur de pression négative avant d'accéder à la lessive par le conduit d'admission d'eau de la machine à laver, si bien que le dispositif d'alimentation automatique en additif exécute une alimentation quantitative.

12. Procédé de fonctionnement d'une machine à laver selon la revendication 11, où ladite machine à laver est une machine à laver selon l'une des revendications 1 à 10.
